# EUROPEAN PATENT SPECIFICATION

(11) **EP 3 021 662 B1**
(45) Date of publication and mention of the grant of the patent: **03.05.2017**
(21) Application number: 14825958.3
(22) Date of filing: 15.07.2014
(51) Int. Cl.: A01K 27/00

(54) **RETRACTABLE PET LEASH**
EINZIEHBARE TIERLEINE
LAISSE RÉTRACTABLE POUR ANIMAL DE COMPAGNIE

(30) Priority: 19.07.2013 IT VR20130171
(43) Date of publication of application: 25.05.2016
(73) Proprietor: FERPLAST S.P.A., 36070 Castelgomberto (VI) (IT)
(72) Inventor: VACCARI, Carlo, 36070 Castelgomberto (VI) (IT)
(74) Representative: Sandri, Sandro
(86) International application number: PCT/IB2014/063124
(87) International publication number: WO 2015/008222

(56) References cited:
- CN-U- 202 245 570
- US-A- 2 526 256
- US-A1- 2006 054 108
- US-A1- 2010 107 992

## Description

### TECHNICAL FIELD

This invention relates to a pet leash of the automatically retractable type fitted with a controlled braking and subsequent complete blocking device, which makes it possible to brake the cord which is fitted on an automatic winder and when necessary to completely block or lock it so as to prevent any further release of the cord in the presence of strong tensions and sudden jolts on it.

In particular this invention refers to a pet leash which, as well as comprising a leash cord braking mechanism, comprises a blocking mechanism which blocks the leash cord completely.

The device according to the invention uses a dual control system which acts with a single control pushbutton on the winder, a first gradual braking system and a subsequent blocking system which acts at the end of the braking step by means of a further increase in the pressure applied on the control pushbutton located on the body of the leash winder.

This invention can be applied in the field of accessories for pets, and in particular in the sector of leashes, more specifically in that of retractable leashes, that is to say, those having a cord or tape of variable length.

### BACKGROUND ART

It is known that pets such as dogs are taken for walks outdoors using leads and leashes. Some types of leash have a device which allows the length of the cord or tape to be varied, since it can be wound up inside a respective winder located inside a containment box provided with a handle.

This makes it possible for the pet to walk away from its owner without creating and consequently being subjected to sudden jolting due to sudden jerks and to simultaneously benefit from a greater range of movement.

Some models of traditional leashes with a retractable cord are designed with mechanisms which stop the unwinding of the cord so as to stop the pet from going any further beyond the point it has reached. This may be necessary, for example, in those cases where a dog has to be made to stop before the leash cord has been completely unwound.

There are currently on one hand prior art mechanisms which allow a gradual braking action to be applied to the cord, and on the other hand mechanisms which completely block leash cord extension. For example, Italian patent application No. VR2013A000025 in the name of the Applicant describes a leash equipped with suitable braking means, whilst document EP-A-1495675 describes a leash with extension blocking means.

Retractable leashes have also been produced which are capable of dual action, that is to say, a first braking action and a second blocking action, such as that described in document US 2010/0107992 A1 and in document WO 2012/077474. However, the means which allow this dual operation to be achieved are located on independent control units, meaning that the user has to pass from one pushbutton to another in order to carry out a braking operation or a blocking operation, with the resulting inconvenience and potential confusion between the different movements. Document CN 202245570 U discloses a brake structure of a winder. The brake structure comprises a ratchet-and-pawl type brake component and a friction type brake component at the same time, wherein the ratchet-and-pawl type brake component and the friction type brake component realize ratchet-and-pawl type brake and friction type brake respectively by the same pushing component. Furthermore, the pushing component comprises a brake rod and a spring, wherein the brake rod comprises a body and a first braking part; one end of the body is connected with the spring; and the first braking part is formed at the other end of the body and stretches from the other end.

Document US 2006/054108 A1 discloses a retractable dog leash system designed to attach to the collar of a pet and be permanently worn in this manner, and comprises an ergonomic handle that fits neatly against the case when the leash is in a retracted condition. The leash system comprises a leash retraction biasing mechanism that is free on one end permitting an unwinding of the biasing mechanism and not merely a tightening of it.

Document US 2526256 A discloses a reel device comprising a bracket, a winding reel rotatably mounted upon said bracket, spring means interconnecting said bracket and said reel for biasing the latter to rotate in one direction, a ratchet pawl device carried by said bracket and geared to said reel for blocking the latter-against rotation in response to the action of said spring means, a conductor outlet aperture formed through said bracket in approximately tangential alignment with said reel, a ratchet release mechanism comprising a sleeve rotatably mounted upon said bracket apertured portion and extending therethrough and operable from exteriorly thereof to actuate said ratchet pawl to release said reel, and a conductor wrapped upon said reel and training therefrom through said sleeve. Therefore, it would be a good idea to have a retractable leash whose winding device were able to first apply gradual braking and subsequently also block extension of the cord or tape, being equipped with control means combined in a single pushbutton for use by the user.

### DISCLOSURE OF THE INVENTION

This invention provides an automatically retractable pet leash with a device for controlled automatic braking and subsequent blocking, that is to say, allowing a single pushbutton be used to control initially gradual braking of the cord on the automatic winder, and subsequently complete blocking of the cord, which makes it possible to eliminate or at least reduce the drawbacks described above.

This invention also provides an automatically retractable pet leash with a controlled braking and complete blocking device, which allows braking of the cord on the automatic winder and also blocking of the cord, which is both simple to make and truly effective.

This is achieved by an automatically retractable pet leash fitted with means for regulated, gradual braking of the cord and complete blocking, whose features are described in the main claim.

The dependent claims of the solution in this invention describe advantageous embodiments of the invention.

The principal advantages of this solution primarily concern the fact that the mechanism according to the invention, applicable on retractable leashes, has the advantage in comparison with known solutions that it provides a product which with a single pushbutton allows the dual possibilities of gradually braking and, if necessary, instantly stopping the dog.

All of this is achieved according to the invention by a cam system mounted between the control and the winder. Pressing the control rotates the cam which thanks to its special profile and the consequent pressing of the brake pad, applies a braking action, whilst pressing the same control further causes complete blocking, due to interference between the control cursor and a special toothing of the winding drum.

### DESCRIPTION OF THE DRAWINGS

Other features and advantages of the invention will become clear on reading the description given below of one embodiment, provided as a non-limiting example, with the help of the accompanying drawings, in which:
- Figure 1 is a schematic cross-section of a retractable leash according to the invention as a whole, with the braking and blocking mechanism in the completely released position;
- Figures 1A, 1B and 1C are enlarged views of several details of the leash of Figure 1;
- Figure 2 is a schematic cross-section of the retractable leash according to the invention, with the braking mechanism at the initial activation step;
- Figure 3 is a schematic cross-section of a retractable leash according to the invention, with the braking and blocking mechanism in the partly blocked position;
- Figure 4 is a schematic cross-section of a retractable leash according to the invention, with the braking and blocking mechanism in the completely blocked position;
- Figure 5 is a schematic and axonometric view of the retractable leash according to the invention, partly transparent, highlighting the structure of the winding drum.

### DESCRIPTION OF ONE EMBODIMENT OF THE INVENTION

The accompanying figures show the retractable leash according to the invention substantially consists of a casing 10 comprising a handle 11 forming a hand grip for a user. Inside the casing there is a winding drum 12 kept under tension by a spring (not illustrated) intercepted by a braking and blocking mechanism according to the invention which is operated using a control 13.

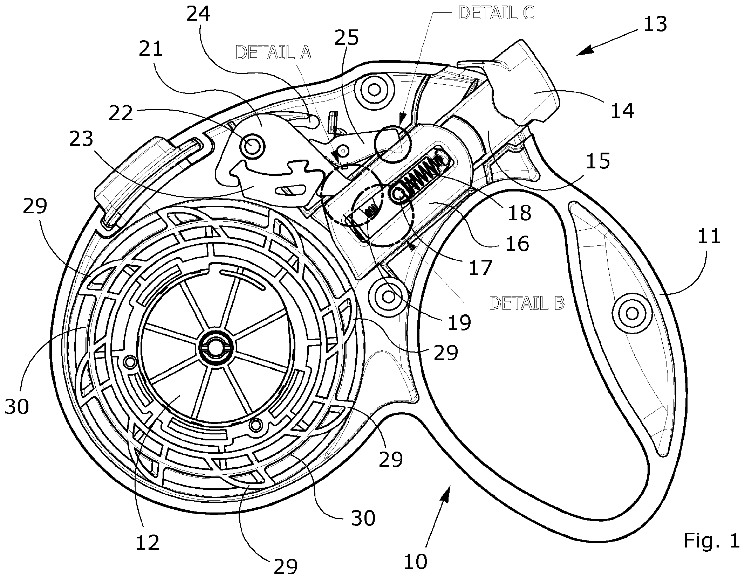

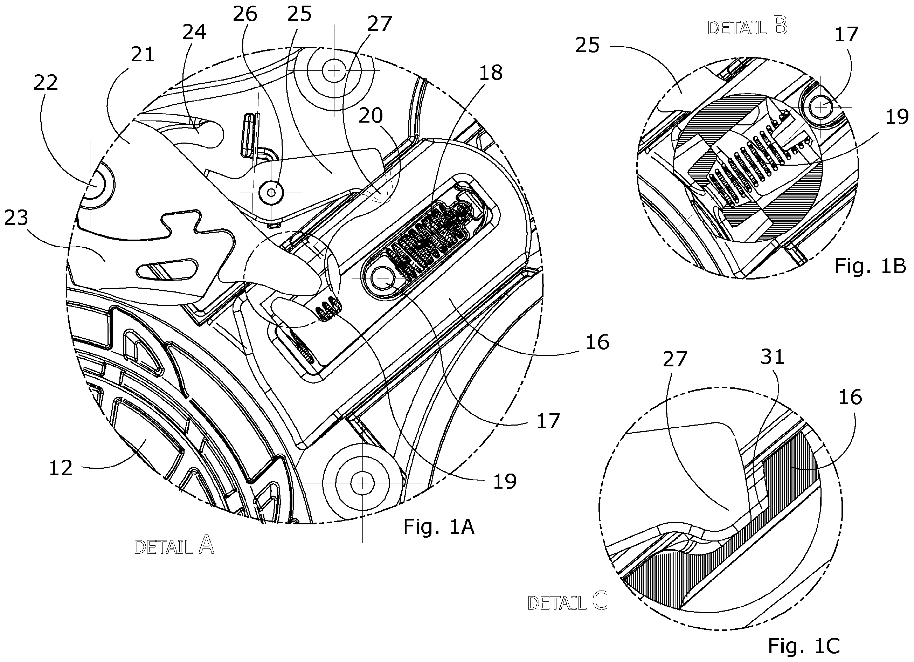

With reference first to Figure 1, it can be seen how the control 13 consists of three components; a pushbutton 14 located at the top of a cursor 15 which in turn has a lower part associated with a fork 16 which causes blocking of the winding drum 12 as described below.

Inside the cursor 15 a slot is made longitudinally, allowing the cursor to slide relative to a fixed pin 17, and the cursor tends to be held in a middle position relative to said pin by two opposite springs 18 and 19, one hooked to the upper part and the other hooked to the lower part of the slot.

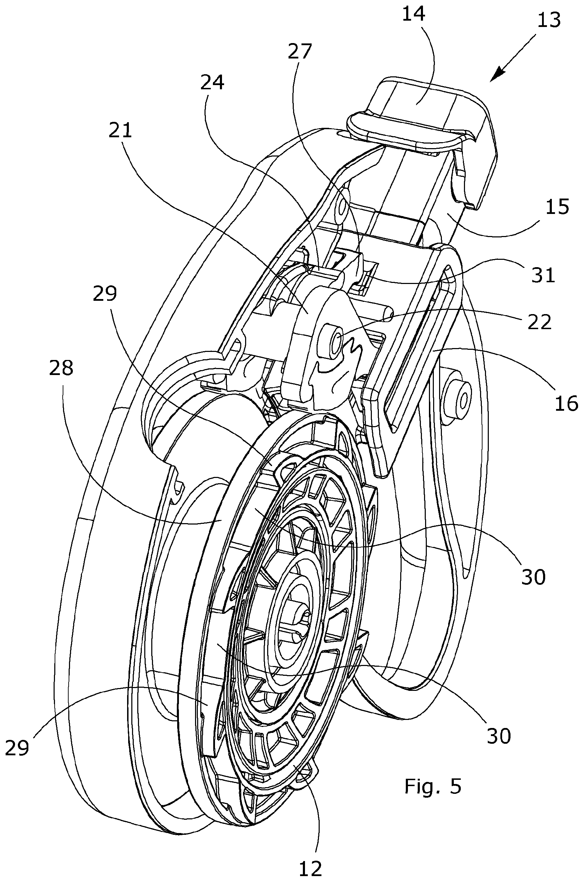

Moreover, the fork 16 comprises a cavity 20 visible in Figure 1A, in which there operates, connected to the cursor 15, the end of a first braking rocking arm lever 21 hinged on a fixed pin 22, supporting a brake pad 23 which intercepts a relatively smooth surface 28 (see Figure 5) of the winding drum 12.

As shown in Figure 1A, the braking lever 21 in turn comprises an appendix 24 positioned in such a way as to intercept a second rocker arm lever 25 located on a fixed pin 26, whose end opposite to the appendix 24 finishes with a small tooth 27 designed to be inserted in a respective cavity 31 of the blocking fork 16 (see Figures 1C and 5).

The small tooth 27 of the lever 25 prevents the action of the blocking fork 16, which in that way can be freed only at the end of the braking step.

As shown in Figure 5, the winding drum 12 has a circular edge divided into sectors, a smooth or slightly corrugated sector 28 and a sector 29 with teeth which form a corresponding number of openings 30.

In terms of operation, the device described can perform two consecutive actions: first, calibrated braking and second, initial partial blocking, followed by complete blocking of the winding drum 12, acting on the control device 13.

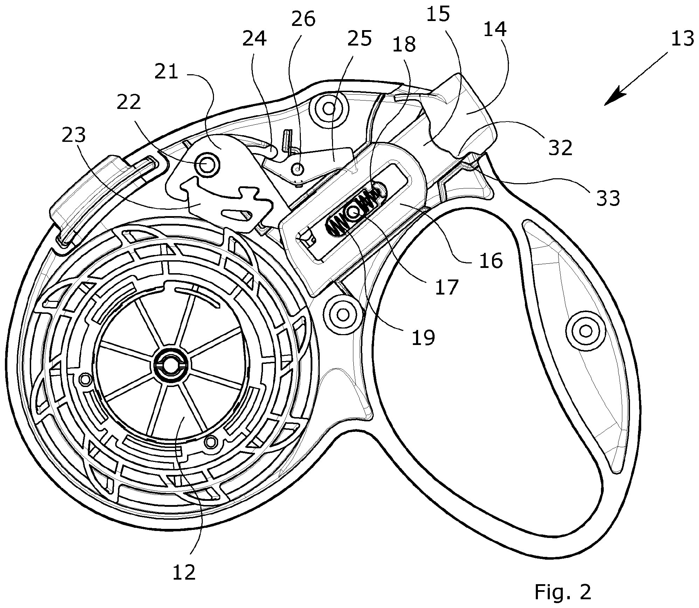

The braking action is obtained (see Figure 2) by acting on the pushbutton 14 which, pushing the cursor 15 causes clockwise rotation of the braking lever 21 whose rubbery pad 23 presses against the smooth or corrugated edge 28 of the winding drum 12, producing braking depending on the pressure applied.

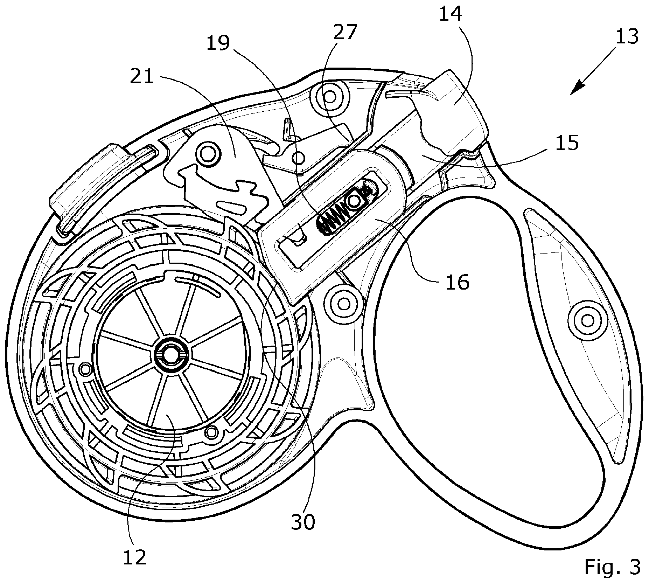

When the braking pressure increases, the appendix 24 of the braking lever 21 in turn applies pressure on the rocker arm lever 25 which rotates anti-clockwise around the pin 26. The small tooth 27 on the opposite end of the rocker arm lever 25 therefore comes out of the seat 31 in which it is inserted on the fork 16, allowing the fork 16, pushed by the spring 19 to penetrate the first cavity 30 of the winding drum 12, completely locking it (see Figure 3).

Finally, the operating pushbutton 14 is equipped with a further blocking system which keeps the winding drum 12 in the blocked condition even when the user removes his finger from the pushbutton 14.

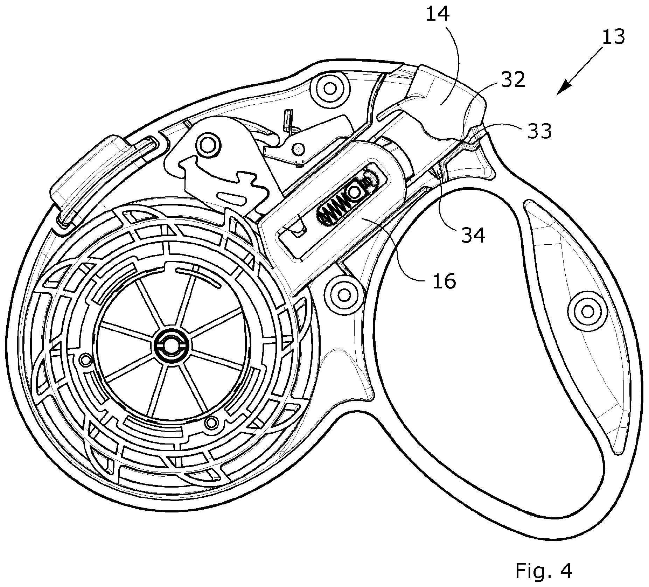

As shown in Figures 3 and 4, the operating pushbutton 14 can be rotated anti-clockwise and is equipped with a tooth 32 which acts against a respective outline 33 of the front wall, made in such a way that by pressing the pushbutton 14 with a finger at the end of the blocking step so that the cursor goes down fully in the winder 12, the pushbutton 14 rotates anti-clockwise, and a tooth 34 (Figure 4) fixed to the pushbutton 14 engages against the outline 33, preventing it from returning.

To release, the tooth 14 is rotated in the opposite direction and, as it rotates clockwise it is released, causing the cursor to return and releasing the winding drum thanks to the action of the spring 18. The leash therefore quickly returns to the position shown in Figure 1.

As can be seen, all possible braking and blocking actions are carried out by the same pushbutton control 13, which when pressed for the first time can provide gradual braking and, if necessary, can also cause complete blocking of the winder and the cord associated with it.

## Claims

1. A retractable leash (10) comprising an internally hollow casing or frame made from metal or synthetic material, forming a handle (11) with which to grip, control and hold the leash, a winding drum (12) subjected to the action of first elastic means and wound around which is a cord or tape whose end is provided with means for fixing the cord or tape to the collar of a pet, said winding drum (12) having a continuous circular surface (28) and a series of openings (30) arranged radially and defined by a series of teeth (29), also comprising a first braking mechanism (21, 23) in which a pad (23) acts by friction against said circular surface (28) of said winding drum (12) and a second blocking mechanism (25, 15, 16) in which an element (16) pushed by second elastic means (19) enters one of said openings (30) causing the rotation of said winding drum (12) to stop, also comprising a control (13) provided with a manually activated pushbutton (14) subjected to the action of third elastic means (18), **characterised in that** said control (13) is equipped with a cursor (15) integral with said pushbutton (14), mobile linearly between two predetermined positions, and which acts on one hand on said braking mechanism so the pressure on the pushbutton (14) determines the progressive interference of said pad (23) with said circular surface (28), and on the other on a component for the release (25, 27) of the blocking mechanism which is activated by continuous pressure on said pushbutton (14), causing immediate movement of the element (16) pushed by said second elastic means inside one of said openings (30).

2. A retractable leash (10) according to claim 1, **characterised in that** said braking mechanism comprises a rocking arm lever (21) rotating around a fixed pin (22) integral with the frame of the leash, one end of said rocker lever (21) being connected to said pad (23), while the other end of said rocker lever (21) is inserted in an opening in said cursor (15), the linear movement of the cursor causing the rotation of said rocker lever (21).

3. A retractable leash according to claim 2, **characterised in that** said rocker lever (21) comprises an appendix (24) designed to engage with an end of a second rocker arm (25) rotating around a fixed pin (26) and whose other end (27) forms the release component of said element (16) of the blocking mechanism.

4. A retractable leash according to any of the foregoing claims, **characterised in that** said pushbutton (14) is provided with a pin (32) partially rotating within a fixed surface (33) of said frame until it reaches a position in which a tooth (34) of said pushbutton interferes with a part of the frame to maintain the blocking element (16) in the blocked position in one of said opening (30).

5. A retractable leash according to any of the foregoing claims, **characterised in that** the blocking element (16) consists of a fork subjected to the contrasting action of said second (18) and third (19) elastic means.

6. A retractable leash according to claim 5, **characterised in that** said second (18) and third (19) elastic means consist of respective compression springs, one of which acts on opposite parts of said fork (16), the other end acting on a common fixed pin (17).

## Patentansprüche

1. Abrollbare Leine (10), umfassend eine innere hohle Schalung oder einen solchen Rahmen aus Metall oder einem synthetischen Material, die bzw. der einen Handgriff (11) zum Greifen, Steuern und Halten der Leine ausbildet, eine Aufrolltrommel (12), die der Einwirkung erster elastischer Mittel unterliegt und um die eine Schnur oder ein Band gewickelt ist, dessen Ende mit Mitteln zum Fixieren der Schnur oder des Bands am Halsband eines Tieres versehen ist, wobei die Aufrolltrommel (12) eine durchgehende kreisförmige Fläche (28) und eine Reihe von Öffnungen (30) aufweist, die radial angeordnet und durch eine Reihe von Zähnen (29) festgelegt sind, ebenfalls umfassend einen Bremsmechanismus (21, 23), in dem ein Klotz (23) durch Reibung gegen die kreisförmige Fläche (28) der Aufrolltrommel (12) einwirkt, und einen zweiten Blockiermechanismus (25, 15, 16), in dem ein von zweiten elastischen Mitteln (19) gedrücktes Element (16) in eine der Öffnungen (30) eindringt, wodurch das Anhalten der Drehung der Aufrolltrommel (12) verursacht wird, ebenfalls umfassend eine Steuerung (13), die mit einem manuell aktivierten Drucktaster (14) versehen ist, der der Einwirkung dritter elastischer Mittel (18) unterliegt, **dadurch gekennzeichnet, dass** die Steuerung (13) mit einem Läufer (15) ausgestattet ist, der einstückig mit dem Drucktaster (14) ausgebildet ist und zwischen zwei vorbestimmten Positionen linear beweglich ist und der einerseits auf den Bremsmechanismus einwirkt, sodass der Druck auf den Drucktaster (14) die fortschreitende Wechselwirkung des Klotzes (23) mit der kreisförmigen Fläche (28) festlegt, und andererseits auf eine Komponente zum Freisetzen (25, 27) des Blockiermechanismus, was durch kontinuierlichen Druck auf den Drucktaster (14) aktiviert wird, wodurch eine sofortige Bewegung des Elements (16), das von den zweiten elastischen Mitteln im Inneren einer der Öffnungen (30) gedrückt wird, verursacht wird.

2. Aufrollbare Leine (10) nach Anspruch 1, **dadurch gekennzeichnet, dass** der Bremsmechanismus einen Kipphebel (21) umfasst, der um einen fixierten Stift (22) dreht, welcher einstückig mit dem Rahmen der Leine ausgebildet ist, wobei ein Ende des Kipphebels (21) mit dem Klotz (23) verbunden ist, während das andere Ende des Kipphebels (21) in eine Öffnung des Läufers (15) eingesetzt ist, wobei die lineare Bewegung des Läufers die Drehung des Kipphebels (21) verursacht.

3. Aufrollbare Leine nach Anspruch 2, **dadurch gekennzeichnet, dass** der Kipphebel (21) einen Ansatz (24) umfasst, der zum Eingriff in ein Ende eines zweiten Kipphebels (25) vorgesehen ist, welcher um einen fixierten Stift (26) dreht, und dessen anderes Ende (27) die Freisetzungskomponente des Elements (16) des Blockiermechanismus ausbildet.

4. Aufrollbare Leine nach einem der vorhergehenden Ansprüche, **dadurch gekennzeichnet, dass** der Drucktaster (14) mit einem Stift (32) versehen ist, der teilweise in einer festen Fläche (33) des Rahmens dreht, bis er eine Position erreicht hat, in der ein Zahn (34) des Drucktasters in Wechselwirkung mit einem Teil des Rahmens ist, um das Blockierelement (16) in der Blockierposition in einer der Öffnungen (30) zu halten.

5. Aufrollbare Leine nach einem der vorhergehenden Ansprüche, **dadurch gekennzeichnet, dass** das Blockierelement (16) aus einer Gabel besteht, die der entgegengesetzten Einwirkung der zweiten (18) und dritten (19) elastischen Mittel ausgesetzt ist.

6. Aufrollbare Leine nach Anspruch 5, **dadurch gekennzeichnet, dass** die zweiten (18) und dritten (19) elastischen Mittel jeweils aus Druckfedern bestehen, von denen eine auf entgegengesetzte Teile der Gabel (16) einwirkt, wobei das andere Ende auf einen gemeinsamen fixierten Stift (17) einwirkt.

## Revendications

1. Laisse rétractable (10) comprenant un carter creux intérieurement ou un cadre en métal ou en matière synthétique, formant une poignée (11) pour saisir, contrôler et retenir la laisse, un tambour d'enroulement (12) qui est soumis à l'action de premiers moyens élastiques et autour duquel est enroulé un cordon ou un ruban dont l'extrémité est munie de moyens de fixation du cordon ou du ruban au collier d'un animal, ledit tambour d'enroulement (12) ayant une surface circulaire continue (28) et une série d'ouvertures (30) disposées radialement et définies par une série de dents (29), comprenant également un premier mécanisme de freinage (21, 23) dans lequel un patin (23) agit par frottement contre ladite surface circulaire (28) dudit tambour d'enroulement (12)) et un second mécanisme de blocage (25, 15, 16) dans lequel un élément (16) poussé par des deuxièmes moyens élastiques (19) pénètre dans l'une desdites ouvertures (30) ce qui cause l'arrêt de la rotation dudit tambour d'enroulement (12), comprenant également une commande (13) pourvue d'un bouton-poussoir (14) actionné manuellement et soumis à l'action de troisièmes moyens élastiques (18), **caractérisée en ce que** ladite commande (13) est équipée d'un curseur (15) solidaire dudit bouton-poussoir (14), mobile linéairement entre deux positions prédéterminées et agissant d'une part sur ledit mécanisme de freinage, de sorte que la pression sur le bouton-poussoir (14) détermine l'interférence progressive dudit patin (23) avec ladite surface circulaire (28), et d'autre part sur un composant (25, 27), destiné à libérer le mécanisme de blocage, qui est activé par pression continue sur ledit bouton-poussoir (14), ce qui cause un mouvement immédiat de l'élément (16) poussé par lesdits seconds moyens élastiques à l'intérieur de l'une desdites ouvertures (30).

2. Laisse rétractable (10) selon la revendication 1, **caractérisée en ce que** ledit mécanisme de freinage comprend un levier à bras basculant (21) tournant sur un axe fixe (22) solidaire du cadre de la laisse, une extrémité dudit levier basculant 21) étant reliée audit patin (23), tandis que l'autre extrémité dudit levier basculant (21) est insérée dans une ouverture dudit curseur (15), le mouvement linéaire du curseur causant la rotation dudit levier basculant (21).

3. Laisse rétractable selon la revendication 2, **caractérisée en ce que** ledit levier basculant (21) comprend un appendice (24) destiné à s'engager avec une extrémité d'un second bras basculant (25) tournant sur un axe fixe (26), l'autre extrémité (27) formant la composante de libération dudit élément (16) du mécanisme de blocage.

4. Laisse rétractable selon l'une quelconque des revendications précédentes, **caractérisée en ce que** ledit bouton-poussoir (14) est muni d'un axe (32) qui tourne partiellement à l'intérieur d'une surface fixe (33) dudit cadre jusqu'à ce qu'il atteigne une position dans laquelle une dent (34) dudit bouton-poussoir interfère avec une partie du cadre pour maintenir l'élément de blocage (16) dans la position bloquée dans l'une de ladite ouverture (30).

5. Laisse rétractable selon l'une quelconque des revendications précédentes, **caractérisée en ce que** l'élément de blocage (16) est constitué par une fourche soumise à l'action antagoniste desdits deuxièmes (18) et troisièmes (19) moyens élastiques.

6. Laisse rétractable selon la revendication 5, **caractérisée en ce que** lesdits deuxièmes (18) et troisièmes (19) moyens élastiques sont constitués de ressorts de compression respectifs dont l'un agit sur des parties opposées de ladite fourche (16), l'autre extrémité agissant sur une tige fixe commune (17).
